# EUROPEAN PATENT SPECIFICATION

(11) **EP 1 763 245 B1**
(45) Date of publication and mention of the grant of the patent: **11.01.2012**
(21) Application number: 06019040.2
(22) Date of filing: 12.09.2006
(51) Int. Cl.: H04N 7/173, H04N 7/24

(54) **Digital broadcasting system and method of outputting digital broadcasting data therefor**
Digitales Rundfunksystem und Verfahren zur Ausgabe von digitalen Rundfunkdaten dafür
Système de radiodiffusion numérique et procédé de production de données numériques de radiodiffusion

(30) Priority: 12.09.2005 KR 20050084732
(43) Date of publication of application: 14.03.2007
(73) Proprietor: Samsung Electronics Co., Ltd., Suwon-si, Gyeonggi-Do (KR)
(72) Inventor: Bae, Jun-Ik, Yeongtong-gu Suwon-si Gyeonggi-do (KR); Kim, Kang-Wook, Yeongtong-gu Suwon-si Gyeonggi-do (KR)
(74) Representative: Lang, Johannes

(56) References cited:
- US-A1- 2001 027 557
- US-A1- 2002 059 631
- US-A1- 2003 051 252
- US-A1- 2004 110 515
- US-A1- 2004 237 103

## Description

### BACKGROUND OF THE INVENTION

### 1. Field of the Invention

The present invention relates generally to a digital broadcasting system, and in particular, to a digital broadcasting system and a method of outputting digital broadcasting data therefor.

### 2. Description of the Related Art

Digital broadcasting provides high-definition, high-quality and better broadcasting service, replacing traditional analog broadcasting. The digital broadcasting is classified into satellite digital broadcasting and terrestrial digital broadcasting.

The satellite digital broadcasting is aimed mainly at mobile service. Thus satellite digital broadcasting enables viewing of multichannel, multimedia broadcasting through a portable receiver (e.g. mobile phone or Personal Digital Assistant (PDA)) or a vehicular receiver irrespective of time and place.

The concept of the terrestrial digital broadcasting originated from Digital Audio Broadcasting (DAB), and provides mobile multimedia broadcasting through a currently available vacant channel, VHF channel 12. Terrestrial digital broadcasting transmits television broadcasting, radio broadcasting and data broadcasting on a plurality of channels. While a conventional terrestrial broadcasting service provider operates on a single analog channel, a digital broadcasting service provider operates on a plurality of channels. A digital data stream with various different services embedded is called an ensemble.

Along with the development of digital broadcasting technology and mobile communication technology, there has been an increasing interest in a digital broadcasting service that allows users to view digital broadcasting while moving. Particularly, digital multimedia broadcasting through a mobile terminal attracts attention.

Since digital broadcasting stations do not provide viewing environment information (e.g. volume, brightness, etc.) regarding broadcasting programs, viewers inconveniently adjust their viewing environments for themselves, for optimum viewing. For example, when viewing a dynamic program such as a sports game, the volume is generally increased for dynamic sounds. In the case of viewing a movie program, stereo sound is set for better sound quality. When viewing a music program, a different equalizer needs to be selected according to the music genre. According to the broadcasting program, the user must manually adjust the brightness.

US patent application US2004/0237103 tries to solve the problem of automatically adjusting the quality of an image in a receiver.

In US2004/0237103 the information related to the image quality is sent by a management server that is separated from the broadcasting station; the management server collects data about the users and sets some quality parameters that are sent to the users.

### SUMMARY OF THE INVENTION

An object of the present invention is to substantially solve at least the above problems and/or disadvantages and to provide at least the advantages below. Accordingly, the present invention provides a digital broadcasting system for enabling a user to conveniently view digital broadcasting in an optimal viewing environment, and a method of outputting digital broadcasting data therefor.

According to one aspect of the present invention, in a digital broadcasting system, a digital broadcasting station transmits digital broadcasting data including viewing environment information, and a digital broadcasting receiving apparatus detects the viewing environment information from the digital broadcasting data and outputs the digital broadcasting data according to the viewing environment information.

According to another aspect of the present invention, in a digital broadcasting receiving apparatus, a digital broadcasting receiver receives digital broadcasting data including viewing environment information. An output portion of the apparatus outputs the digital broadcasting data. A controller detects the viewing environment information from the digital broadcasting data and controls the digital broadcasting data to be output according to the viewing environment information.

According to a further aspect of the present invention, in a method of outputting digital broadcasting data in a digital broadcasting receiving apparatus, digital broadcasting data including viewing environment information is received in a digital broadcasting mode. The viewing environment information is detected from the digital broadcasting data. The digital broadcasting data is output by the apparatus according to the viewing environment information.

### BRIEF DESCRIPTION OF THE DRAWINGS

The above and other objects, features and advantages of the present invention will become more apparent from the following detailed description when taken in conjunction with the accompanying drawings in which:
FIG. 1 illustrates the configuration of a digital broadcasting system according to the present invention;
FIG. 2 is a block diagram of a digital broadcasting receiving apparatus according to the present invention;
FIG. 3 is a flowchart illustrating an operation for outputting digital broadcasting data in the digital broadcasting receiving apparatus according to an embodiment of the present invention; and
FIG. 4 is a flowchart illustrating an operation for outputting digital broadcasting data in the digital broadcasting receiving apparatus according to another embodiment of the present invention.

### DETAILED DESCRIPTION OF THE PREFERRED EMBODIMENTS

Preferred embodiments of the present invention will be described herein below with reference to the accompanying drawings. In the following description, well-known functions or constructions are not described in detail since they would obscure the invention in unnecessary detail.

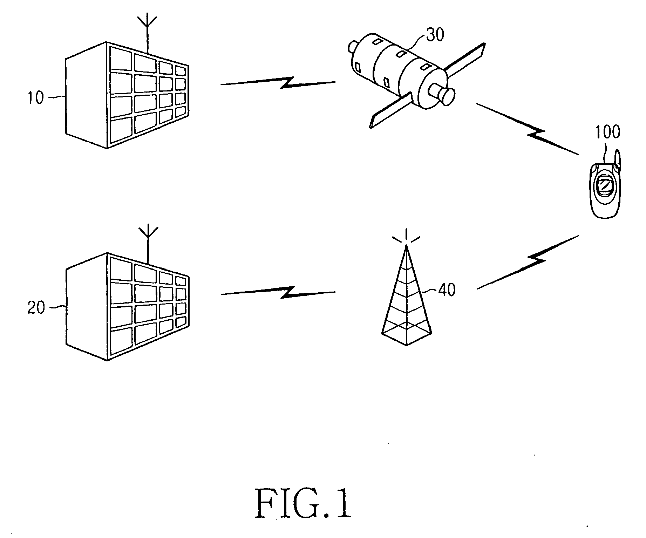

FIG. 1 illustrates the configuration of a digital broadcasting system according to the present invention.

Referring to FIG. 1, the digital broadcasting system includes broadcasting stations 10 and 20 for broadcasting multimedia data in the form of broadcasting data and a digital broadcasting receiving apparatus 100 for receiving the digital broadcasting data and outputting the multimedia data. Digital broadcasting data from the satellite broadcasting station 10 is transferred to the digital broadcasting receiving apparatus 100 through a satellite 30, while digital broadcasting data from the terrestrial broadcasting station 20 is transferred to the mobile terminal 100 through a terrestrial relay 40. The digital broadcasting data may contain viewing environment information that may include audio volume, brightness, sound effects (e.g. equalizer) for a particular digital broadcasting system.

The digital broadcasting receiving apparatus 100 can be a stationary terminal, a vehicular terminal or a portable terminal capable of receiving digital broadcasting. The digital broadcasting apparatus 100 detects the viewing environment information from the received digital broadcasting data and outputs the digital broadcasting data according to the viewing environment information.

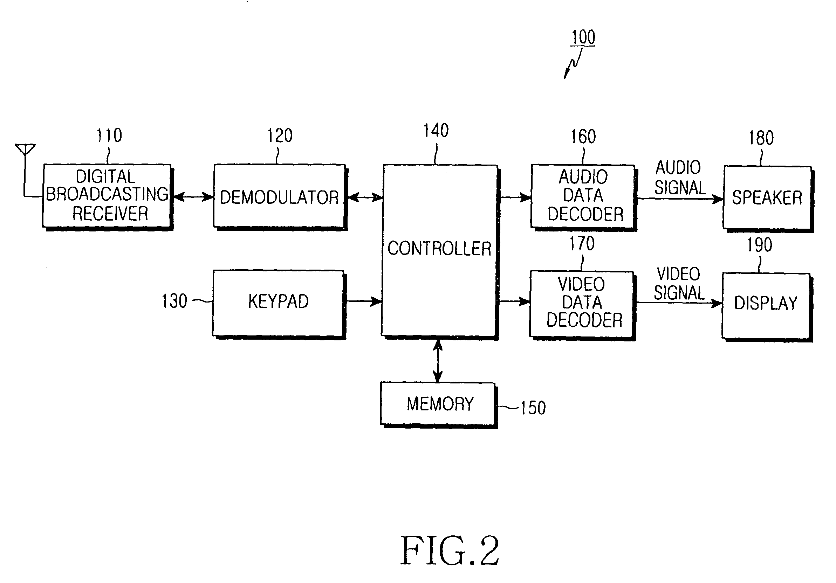

FIG. 2 is a block diagram of the digital broadcasting receiving apparatus 100 according to the present invention.

Referring to FIG. 2, the digital broadcasting receiving apparatus 100 include a digital broadcasting receiver 110, a demodulator 120, a keypad 130, a controller 140, a memory 150, an audio data decoder 160, a video data decoder 170, a speaker 180, and a display 190.

The digital broadcasting receiver 110 provides received digital broadcasting data to the demodulator 120. The digital broadcasting data may include optimal viewing environment information for a broadcasting program. The viewing environment information may also include information about audio volume, brightness and sound effects.

The viewing environment information is set in the digital broadcasting data in the following way.

A broadcasting station can load viewing environment information in a new field or an existing field of the digital broadcasting data, that is, a Motion Picture Expert Group2-Transport Stream (MPEG2-TS). Or the viewing environment information can substitute for stuffing data of the digital broadcasting data.

Parameters in the viewing environment information range from 0 to 255, for example. If 200 is written in a volume level field, this means that a volume level is 200. Preferably, IDenfitiers (IDs) that identify such parameters are included in the viewing environment information. The MPEG2-TS data is known in the communication field and thus its detailed description is not provided.

Aside from the above methods, the viewing environment information can be delivered on a periodically transmitted common channel such as an Electronic Program Guide (EPG) channel.

The demodulator 120 demodulates the digital broadcasting data into a digital data stream.

The keypad 130 includes alphanumerical keys and function keys, for providing a key input signal corresponding to a key pressed by the user to the controller 140.

The controller 140 provides overall control to the digital broadcasting receiving apparatus 100 according to the embodiment of the present invention. The controller 140 also parses the digital broadcasting stream received from the demodulator 120 into an audio data stream and a video data stream, and outputs each stream to the speaker 180 and the display 190, respectively, through the audio data decoder 160 and the video data decoder 170.

Upon receipt of the digital broadcasting data including the viewing environment information at the digital broadcasting receiver 110, the controller 140 detects the viewing environment information and controls the digital broadcasting data to be output according to the viewing environment information. At the same time, the controller 140 can notify the user of the viewing environment information by voice or text.

Alternatively, the controller 140 may notify the user of the presence of the viewing environment information in the digital broadcasting data before detecting the viewing environment information. The notification is preferably a text message or a predetermined icon displayed during the output of the digital broadcasting data. If receiving a request for applying the viewing environment information from the user (for example, input of an OK key), the controller 140 detects the viewing environment information from the digital broadcasting data and controls the digital broadcasting data to be output according to the viewing environment information.

The memory 150 can be comprised of a program memory and a data memory. The memory 150 stores information required for controlling the operation of the digital broadcasting receiving apparatus 100 and information selected according to user selection information in the present invention. Thus, the memory 150 may include a Read Only Memory (ROM) for storing an operating algorithm accessed by the controller 140 for overall control of the digital broadcasting receiving apparatus 100, and a Random Access memory (RAM) for storing data according to a control command from the controller 140 during data processing.

The audio data decoder 160 decodes a received audio data stream into an analog audio signal and outputs the analog audio signal through the speaker 180, under the control of the controller 140.

The video data decoder 170 decodes a received video data stream into an analog video signal and outputs the analog video signal to the display 190, under the control of the controller 140. The speaker 180 and the display 190 function as an output portion in the digital broadcasting receiving apparatus 100.

The display 190 can be a Liquid Crystal Display (LCD). The display 190 displays video data generated from the digital broadcasting receiving apparatus 100 and the video signal decoded by the video data decoder 170. If the LCD is implemented in a touch screen fashion, the display 190 also functions as an input device.

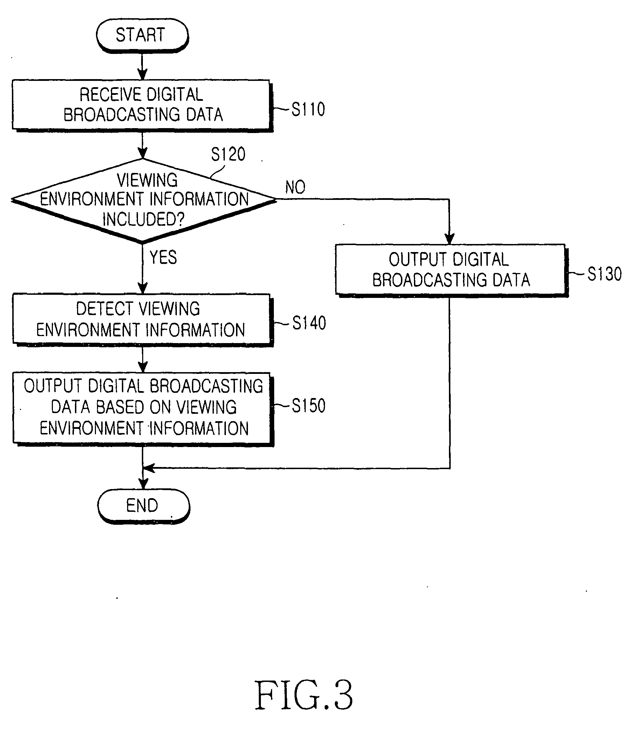

FIG. 3 is a flowchart illustrating a digital broadcasting method in the digital broadcasting receiving apparatus according to an embodiment of the present invention.

Referring to FIGs. 2 and 3, the controller 140 receives digital broadcasting data through the digital broadcasting receiver 110 in a digital broadcasting mode in step S 110.

In step S120, the controller 140 determines if the digital broadcasting data includes viewing environment information. As described with reference to FIG. 2, the viewing environment information can be set in an MPEG2-TS stream or EPG information.

In the absence of the viewing environment information, the controller 140 in step S 130 demodulates the digital broadcasting data through the demodulator 120 and outputs the demodulated digital broadcasting data to the speaker 180 and the display 190 through the audio data decoder 160 and the video data decoder 170.

If the viewing environment information is included in the digital broadcasting data, the controller 140 detects the viewing environment information from the digital broadcasting data in step S 140. The viewing environment information may contain information about an audio volume, brightness, and sound effects. The controller 140 preferably notifies the user of the viewing environment information by a voice message or a text message.

In step S 150, the controller 140 outputs the digital broadcasting data through the speaker 180 and the display 190 according to the viewing environment information. That is, the controller 140 adjusts the audio volume, brightness and sound effects of the digital broadcasting according to the audio volume, brightness, and sound effects set in the viewing environment information.

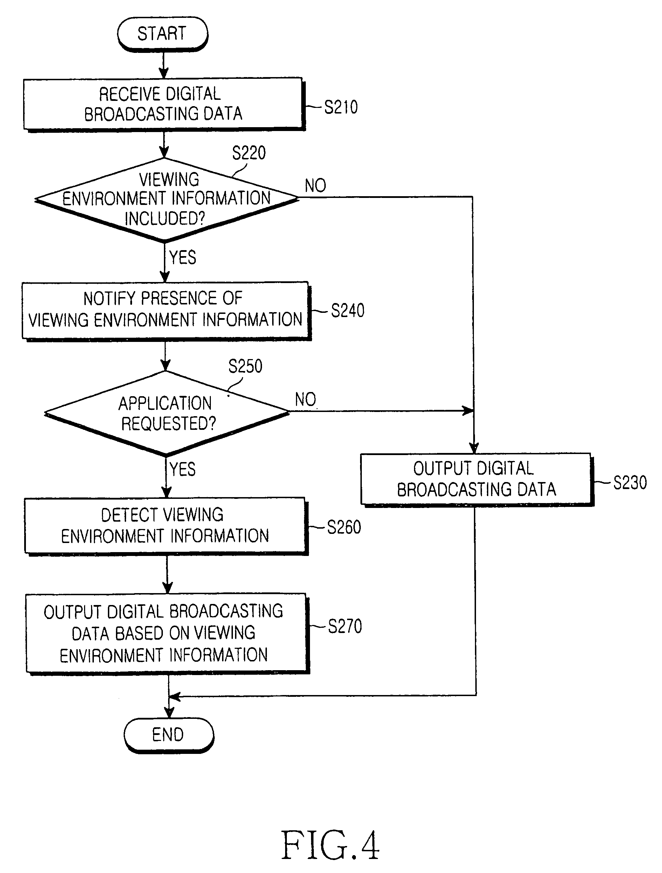

FIG. 4 is a flowchart illustrating a digital broadcasting method in the digital broadcasting receiving apparatus according to another embodiment of the present invention.

Referring to FIGs. 2 and 4, the controller 140 receives digital broadcasting data through the digital broadcasting receiver 110 in a digital broadcasting mode in step S210.

In step S220, the controller 140 determines if the digital broadcasting data includes viewing environment information. As described with reference to FIG. 2, the viewing environment information can be set in an MPEG2-TS stream or EPG information.

In the absence of the viewing environment information, in step S230 the controller 140 demodulates the digital broadcasting data through the demodulator 120 and outputs the demodulated digital broadcasting data to the speaker 180 and the display 190 through the audio data decoder 160 and the video data decoder 170.

If the viewing environment information is included in the digital broadcasting data, the controller 140 notifies the user of the existence of the viewing environment information in step S240. The notification can be a text message or a predetermined icon displayed during digital broadcasting.

In step S250, the controller 140 monitors for a receipt of a request of applying the viewing environment information from the user (e.g., input of an OK key). The viewing environment information applying request means that the digital broadcasting data is required to be output in accordance with the viewing environment information. The user can make the request by pressing a Menu Key or a separately designated key.

If the user has not requested application of the viewing environment information, the controller 140 outputs the digital broadcasting data in step in step S230. If the user requests the application of the viewing environment information in step S250, the controller 140 detects the viewing environment information from the digital broadcasting data in step S260.

In step S270, the controller 140 outputs the digital broadcasting data through the speaker 180 and the display 190 according to the viewing environment information. The controller 140 can display the viewer environment information in an On-Screen Display (OSD) manner so that the user can easily correct the viewing environment information after checking it.

As described above, the present invention enables a user to conveniently view digital broadcasting under an optimal broadcasting environment for each broadcasting program by outputting digital broadcasting data in correspondence to viewing environment information set for each broadcasting program.

While the invention has been shown and described with reference to certain preferred embodiments thereof, it will be understood by those skilled in the art that various changes in form and details may be made therein without departing from the spirit and scope of the invention as defined by the appended claims.

## Claims

1. A digital broadcasting system, comprising:
a digital broadcasting station (10, 20) for transmitting digital broadcasting data including a digital broadcasting program and a separate viewing environment information For the transmitted digital broadcasting program the viewing environment information comprising information about at least one of an audio volume, brightness, and equalizer effects for the digital broadcasting program, and a digital broadcasting receiving apparatus (100) for receiving the digital broadcasting data, outputting a notification that the viewing environment information is present in the digital broadcasting data, detecting the viewing environment information from the digital broadcasting data, and outputting the digital broadcasting data by adjusting the digital broadcasting receiving apparatus according to the viewing environment information.

2. A digital broadcasting receiving apparatus (100), comprising:
a digital broadcasting receiver (110) for receiving digital broadcasting data including a digital broadcasting program and a separate viewing environment information For the transmitted digital broadcasting program the viewing environment information comprising information about at least one of an audio volume, brightness, and equalizer effects for the digital broadcasting program;
an output portion (180, 190) for outputting the digital broadcasting data; and
a controller (140) for outputting a notification that the viewing environment information is present in the digital broadcasting data, detecting the viewing environment information from the digital broadcasting data and controlling the digital broadcasting data to be output by adjusting the digital broadcasting receiving apparatus according to the viewing environment information.

3. The digital broadcasting receiving apparatus of claim 2, wherein the controller controls the detected viewing environment information to be output.

4. The digital broadcasting receiving apparatus of claim 2, wherein upon receipt of a user request for applying the viewing environment information in response to the notification, the controller detects the viewing environment information from the digital broadcasting data and controls the digital broadcasting data to be output according to the viewing environment information.

5. A method of outputting digital broadcasting data in a digital broadcasting receiving apparatus, comprising the steps of:
receiving (S110, S210), in a digital broadcasting mode, digital broadcasting data including a digital broadcasting program and a separate viewing environment information For the transmitted digital broadcasting program the viewing environment information comprising information about at least one of an audio volume, brightness, and equalizer effects for the digital broadcasting program;
outputting a notification that the viewing environment information is present in the digital broadcasting data;
detecting (S140, S260) the viewing environment information from the digital broadcasting data; and
outputting (S150, S270) the digital broadcasting data by adjusting the digital broadcasting receiving apparatus according to the viewing environment information.

6. The method of claim 5, further comprising the step of displaying the detected viewing environment information.

7. The method of claim 5, further comprising the steps of:
detecting (S260) the viewing environment information from the digital broadcasting data, upon receipt (250) of a user request for applying the viewing environment information; and
outputting (270) the digital broadcasting data according to the viewing environment information

## Patentansprüche

1. Digitales Rundfunksystem, aufweisend:
eine digitale Rundfunkstation (10, 20) zum Senden digitaler Rundfunkdaten, die ein digitales Rundfunkprogramm und eine getrennte Betrachtungsumgebungsinformation für das gesendete digitale Rundfunkprogramm enthalten, wobei die Betrachtungsumgebungsinformation Information über zumindest eine aus einer Audio-Lautstärke, Helligkeit und Entzerrer-Effekten für das digitale Rundfunkprogramm enthält; und
eine digitale Rundfunkempfangsvorrichtung (100) zum Empfangen der digitalen Rundfunkdaten, zum Ausgeben einer Benachrichtigung, dass die Betrachtungsumgebungsinformation in den digitalen Rundfunkdaten vorhanden ist, zum Detektieren der Betrachtungsumgebungsinformation aus den digitalen Rundfunkdaten, und zum Ausgeben der digitalen Rundfunkdaten durch Anpassen der digitalen Rundfunkempfangsvorrichtung gemäß der Betrachtungsumgebungsinformation.

2. Digitale Rundfunkempfangsvorrichtung (100), aufweisend:
ein digitaler Rundfunkempfänger (110) zum Empfangen von digitalen Rundfunkdaten, die ein digitales Rundfunkprogramm und die getrennte Betrachtungsumgebungsinformation für das gesendete digitale Rundfunkprogramm enthalten, wobei die Betrachtungsumgebungsinformation Information über zumindest eine aus einer Audio-Lautstärke, Helligkeit und Entzerrer-Effekten für das digitale Rundfunkprogramm enthält;
ein Ausgabeteil (180, 190) zum Ausgeben der digitalen Rundfunkdaten; und
eine Steuerung (140) zum Ausgeben einer Benachrichtigung, dass die Betrachtungsumgebungsinformation in den digitalen Rundfunkdaten vorhanden ist, zum Detektieren der Betrachtungsumgebungsinformation aus den digitalen Rundfunkdaten und Steuern der auszugebenden digitalen Rundfunkdaten durch Anpassen der digitalen Rundfunkempfangsvorrichtung gemäß der Betrachtungsumgebungsinformation.

3. Digitale Rundfunkempfangsvorrichtung nach Anspruch 2, wobei die Steuerung die detektierte Betrachtungsumgebungsinformation so steuert, dass sie ausgegeben wird.

4. Digitale Rundfunkempfangsvorrichtung nach Anspruch 2, wobei nach Empfang einer Benutzeranforderung zum Anwenden der Betrachtungsumgebungsinformation in Antwort auf die Benachrichtigung, die Steuerung die Betrachtungsumgebungsinformation aus den digitalen Rundfunkdaten detektiert und die auszugebenden digitalen Rundfunkdaten gemäß der Betrachtungsumgebungsinformation steuert.

5. Verfahren zum Ausgeben von digitalen Rundfunkdaten in einer digitalen Rundfunkempfangsvorrichtung, aufweisend die Schritte:
Empfangen (S110, S210), in einem digitalen Rundfunkmodus, von digitalen Rundfunkdaten, die ein digitales Rundfunkprogramm und eine getrennte Betrachtungsumgebungsinformation für das gesendete digitale Rundfunkprogramm enthalten, wobei die Betrachtungsumgebungsinformation Information über zumindest eine aus einer Audio-Lautstärke, Helligkeit und Entzerrer-Effekten für das digitale Rundfunkprogramm enthält;
Ausgeben einer Benachrichtigung, dass die Betrachtungsumgebungsinformation in den digitalen Rundfunkdaten vorhanden ist;
Detektieren (S140, S260) der Betrachtungsumgebungsinformation aus den digitalen Rundfunkdaten; und
Ausgeben (S150, S270) der digitalen Rundfunkdaten durch Anpassen der digitalen Rundfunkempfangsvorrichtung gemäß der Betrachtungsumgebungsinformation.

6. Verfahren nach Anspruch 5, weiterhin aufweisend den Schritt eines Anzeigens der detektierten Betrachtungsumgebungsinformation.

7. Verfahren nach Anspruch 5, weiterhin aufweisend die Schritte:
Detektieren (S260) der Betrachtungsumgebungsinformation aus den digitalen Rundfunkdaten nach Empfang (250) einer Benutzeranforderung zum Anwenden der Betrachtungsumgebungsinformation; und
Ausgeben (270) der digitalen Rundfunkdaten gemäß der Betrachtungsumgebungsinformation.

## Revendications

1. Un système de télédiffusion numérique, comprenant :
une station de télédiffusion numérique (10, 20) pour émettre des données de télédiffusion numérique comprenant un programme télédiffusé numérique et des informations distinctes d'environnement de visualisation pour le programme télédiffusé numérique émis, les informations d'environnement de visualisation comprenant des informations concernant au moins l'un d'entre : un volume audio, la luminosité et des effets d'égaliseur pour le programme de télédiffusion numérique, et
un appareil de réception de télédiffusion numérique (100) pour recevoir les données de télédiffusion numérique, délivrer en sortie une notification que les informations d'environnement de visualisation sont présentes dans les données de télédiffusion numérique, détecter les informations d'environnement de visualisation à partir des données de télédiffusion numérique, et délivrer en sortie les données de télédiffusion numérique par ajustement de l'appareil de réception de télédiffusion numérique en fonction des informations d'environnement de visualisation.

2. Un appareil de réception de télédiffusion numérique (100), comprenant :
un récepteur de télédiffusion numérique (110) pour recevoir des données de télédiffusion numérique comprenant un programme de télédiffusion numérique et des informations distinctes d'environnement de visualisation pour le programme de télédiffusion numérique émis, les informations de visualisation comprenant des informations sur au moins l'un d'entre : un volume audio, la luminosité, et des effets d'égaliseur pour le programme de télédiffusion numérique,
un étage de sortie (180, 190) pour délivrer en sortie les données de télédiffusion numérique ; et
un contrôleur (140) pour délivrer en sortie une notification que les informations d'environnement numérique sont présentes dans les données de télédiffusion numérique, détecter les informations d'environnement numérique à partir des données de télédiffusion numérique et contrôler les données de télédiffusion numérique à délivrer en sortie par ajustement de l'appareil de réception de télédiffusion numérique en fonction des informations d'environnement de visualisation.

3. L'appareil de réception de télédiffusion numérique de la revendication 2, dans lequel le contrôleur contrôle les informations d'environnement de visualisation détectées à délivrer en sortie.

4. Le dispositif de réception de télédiffusion numérique de la revendication 2, dans lequel sur réception d'une requête utilisateur d'appliquer les informations d'environnement de visualisation en réponse à la notification, le contrôleur détecte les informations d'environnement de visualisation à partir des données de télédiffusion numérique et contrôle les données de télédiffusion numérique devant être délivrées en sortie en fonction des informations d'environnement de visualisation.

5. Un procédé de délivrance en sortie de données de télédiffusion numérique dans un appareil de réception de télédiffusion numérique, comprenant les étapes suivantes :
réception (S110, S210), dans un mode de télédiffusion numérique, de données de télédiffusion numérique comprenant un programme de télédiffusion numérique et des informations distinctes d'environnement de visualisation pour le programme de télédiffusion numérique émis, les informations d'environnement de visualisation comprenant des informations sur au moins l'un d'entre : un volume audio, la luminosité et des effets d'égaliseur pour le programme de télédiffusion numérique ;
délivrance en sortie d'une notification que les informations d'environnement de visualisation sont présentes dans les données de télédiffusion numérique ;
détection (S140, S260) des informations d'environnement de visualisation à partir des données de télédiffusion numérique ; et
délivrance en sortie (S150, S270) des données de télédiffusion numérique par ajustement de l'appareil de réception de télédiffusion numérique en fonction des informations d'environnement de visualisation.

6. Le procédé de la revendication 5, comprenant en outre l'étape d'affichage des informations d'environnement de visualisation détectées.

7. Le procédé de la revendication 5, comprenant en outre les étapes suivantes :
détection (S260) des informations d'environnement de visualisation à partir des données de télédiffusion numérique, sur réception (250) d'une requête utilisateur d'appliquer les informations d'environnement de visualisation ; et
délivrance en sortie (270) des données de télédiffusion numérique en fonction des informations d'environnement de visualisation.
